# DEMANDE DE BREVET EUROPEEN

(11) **EP 1 067 813 A1**
(43) Date de publication de la demande: **10.01.2001**
(21) Numéro de dépôt: 00401633.3
(22) Date de dépôt: 08.06.2000
(51) Int. Cl.: H04Q 7/38

(54) **Procédé de mise à jour des enregistreurs de localisations dans un réseau radiotéléphonique; enregistreur nominal et enregistreur d'accueil pour la mise en oeuvre de ce procédé**

(30) Priorité: 05.07.1999 FR 9908616
(71) Demandeur: ALCATEL, 75008 Paris (FR)
(72) Inventeur: Larousse, Roger, 22700 Perros Guirec (FR); Maisonnette, Francis, 91240 Saint Michel sur Orge (FR)
(74) Mandataire: Sciaux, Edmond

(57) **Abrégé**

Procédé de mise à jour des enregistreurs de localisation (VLR, HLR) des mobiles (SM), dans un réseau radiotéléphonique, d'un opérateur, qui est organisé par zones, et plus particulièrement d'un réseau GSM, où tout mobile se localise, lorsqu'il se déplace d'une zone à une autre et où cette localisation est prise en compte par une structure de localisation composée d'enregistreurs d'accueil (VLR) supervisant chacun au moins une zone et d'au moins un enregistreur nominal (HLR) pour la supervision de l'ensemble des abonnés de l'opérateur.

Le procédé consiste à accompagner une requête de localisation, émise d'un enregistreur d'accueil à un enregistreur nominal, pour un usager, par une demande de gel de l'envoi des données d'abonnement relatives à cet usager, lorsque le mobile est dans une zone prédéterminée où il passera rapidement, probablement sans émettre ou recevoir un appel.

## Description

L'invention concerne un procédé de mise à jour des enregistreurs de localisation des terminaux mobiles d'usager, ou « mobiles », dans un réseau radiotéléphonique cellulaire placé sous le contrôle d'un opérateur et organisé par zones de localisation de mobiles. Elle concerne plus particulièrement un réseau de type GSM.

Comme il est connu, dans les réseaux radiotéléphoniques cellulaires de ce type, il est prévu qu'un réseau géré par un opérateur connaisse à tout instant la position d'un mobile SM utilisé par un usager, afin de pouvoir le joindre, cet usager pouvant être soit abonné auprès de cet opérateur, soit auprès d'un autre opérateur ayant un accord avec le précédent. En raison de la mobilité des usagers, il est nécessaire de prévoir une mise à jour de la localisation des différents usagers présents dans les différentes zones de localisation, à constitution cellulaire, que comporte un réseau donné.

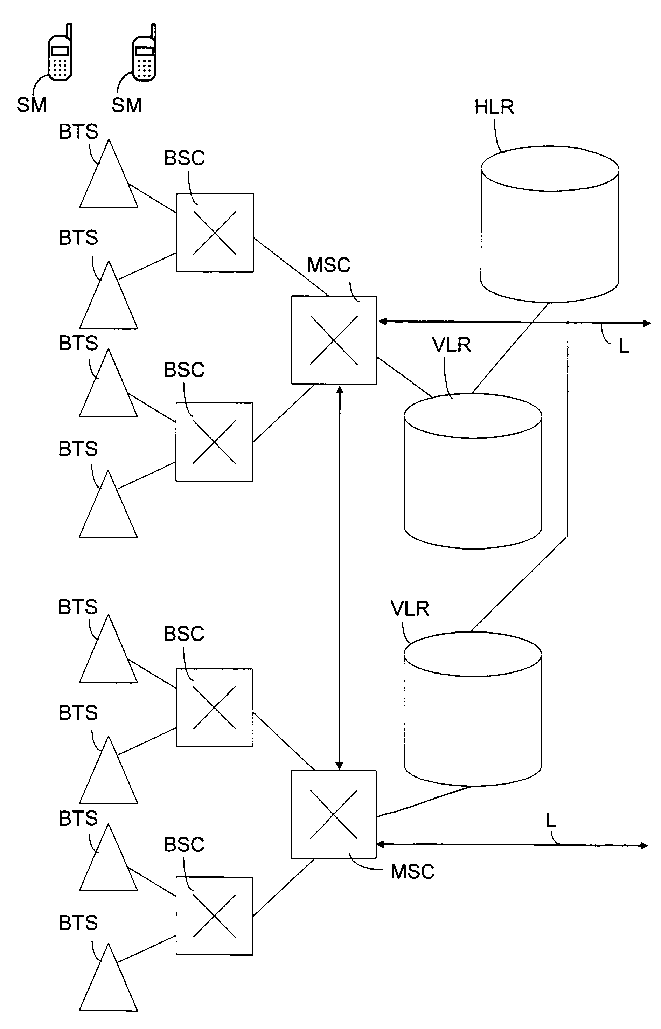

Selon une méthode largement exploitée, la localisation d'un mobile SM s'effectue, lorsqu'il se déplace d'une zone de localisation à une autre. Comme schématisé sur la figure unique, chaque station de base émettrice-réceptrice fixe BTS diffuse périodiquement le numéro de la zone de localisation à laquelle elle appartient, sur une voie balise. Les mobiles, sous tension, écoutent la voie balise et chacun d'eux stocke en permanence le numéro de la zone de localisation courante dont il dépend. Si le numéro de zone que reçoit un mobile est différent de celui qu'il stocke, il se signale pour que le réseau prenne en compte sa nouvelle localisation et mette à jour les bases de données de ses enregistreurs de localisation.

Les mobiles opérant dans les zones de localisation propres à un réseau géré par un opérateur sont suivis par des enregistreurs d'accueil VLR qui sont des bases de données propres à cet opérateur.

Habituellement, la base de données d'un enregistreur d'accueil VLR stocke les données d'abonnement des usagers dont le mobile est présent dans la ou les zones que cet enregistreur VLR supervise. A cet effet, chaque enregistreur d'accueil VLR dialogue avec les stations de base BTS qui servent d'intermédiaire avec les mobiles dans la ou les zones qu'il supervise. Ces dialogues s'effectuent par l'intermédiaire d'une infrastructure de communication qui relie les stations de base aux enregistreurs d'accueil VLR et couramment à au moins un réseau de télécommunications autre que le réseau GSM considéré, par exemple à un réseau téléphonique commuté externe symbolisé ici par deux de ses liaisons L. Comme il est connu, cette infrastructure comporte habituellement des commutateurs de concentration incorporés dans des contrôleurs de station BSC, qui gèrent chacun les ressources radio pour une ou plusieurs stations de base BTS, ainsi que des centres de commutation MSC auxquels sont reliés les commutateurs de concentration, les enregistreurs d'accueil VLR et des liaisons L de réseau externe.

Les enregistreurs d'accueil VLR du réseau d'un opérateur donné ont accès à des enregistreurs de localisation nominaux HLR qui servent de base de données pour un ensemble d'usagers constitué des propres abonnés de cet opérateur, et des abonnés des opérateurs ayant des accords avec lui. Les enregistreurs nominaux HLR d'un réseau donné stockent des données relatives à chacun des usagers de cet ensemble, et le numéro de l'enregistreur d'accueil VLR, où le mobile utilisé par un usager a été enregistré par l'opération de localisation. Cet enregistreur d'accueil mémorise aussi, temporairement, les données d'abonnement de cet usager. En effet, les données d'abonnement d'un usager dont le mobile est présent dans une zone géographique, sont habituellement communiquées à l'enregistreur d'accueil VLR supervisant cette zone, par l'enregistreur nominal HLR supervisant cet usager, lorsque le mobile de l'usager vient de pénétrer et de se localiser dans la zone supervisée par cet enregistreur d'accueil VLR.

Un enregistreur nominal HLR doit disposer à tout instant d'une image de la localisation de l'ensemble des abonnés qu'il a la charge de superviser. L'exploitation du réseau implique que cette image soit actualisée en permanence, ce qui est obtenu par la réalisation d'opérations de mise à jour. La mise à jour de la localisation s'effectue à l'initiative des mobiles, elle est déclenchée par la détection par un mobile de son passage d'une zone à une autre.

A cette fin, selon le procédé défini dans la spécification GSM 09.02, le passage d'un usager d'une zone à une autre est pris en compte au niveau d'un enregistreur d'accueil VLR, qui est informé par la station de base avec laquelle le mobile utilisé par cet usager s'est signalé, et une requête est envoyée à l'enregistreur nominal HLR de supervision d'abonnés ayant la charge de cet usager. Cet enregistreur nominal HLR réalise alors un ensemble de traitements de contrôle de droits et de services qui est suivi par l'envoi de messages contenant les données de l'usager concerné à l'enregistreur d'accueil VLR par l'intermédiaire duquel la requête a été émise. Tout ceci se traduit par une certaine charge de traitement, tant au niveau des enregistreurs VLR et HLR concernés qu'au niveau des liaisons de communication qui relient les enregistreurs nominaux HLR aux enregistreurs d'accueil VLR.

Dans le cas de zones très denses et préférablement peu étendues, notamment lorsque ces zones comportent des voies à grande circulation, il peut y avoir un grand nombre d'usagers se signalant comme pénétrant dans une même zone en même temps, ce qui se traduit donc par un trafic de communication important entre l'enregistreur d'accueil VLR supervisant une telle zone et les enregistreurs nominaux HLR.

Or un certain nombre des usagers, qui se signalent comme pénétrant dans une zone, vont y séjourner ou en ressortir sans déclencher aucun appel de mise en communication. Le trafic de signalisation, que chacun d'eux engendre entre l'enregistreur d'accueil VLR qui le dessert et l'enregistreur nominal HLR chargé de le superviser, est donc inutilement écoulé et il tend à réduire la capacité d'écoulement du trafic concernant les abonnés ayant réellement à communiquer.

Le but de l'invention est de proposer un procédé de mise à jour d'enregistreurs de localisation des mobiles, qui n'ait pas cet inconvénient.

Un premier objet de l'invention est un procédé de mise à jour qui est plus particulièrement destiné à être mis en oeuvre dans le cadre d'un réseau qui est organisé par zones de localisation de mobiles, à constitution cellulaire où tout mobile, sous tension, se localise auprès du réseau, lorsqu'il se déplace d'une zone à une autre, et où cette localisation est prise en compte par une structure de localisation de mobiles composée d'enregistreurs d'accueil VLR supervisant chacun au moins une zone de localisation et d'un ou de plusieurs enregistreurs nominaux supervisant l'ensemble des abonnés du réseau de l'opérateur, chaque enregistreur d'accueil VLR étant à même de communiquer avec un enregistreur nominal HLR à chaque localisation réalisée à l'initiative d'un mobile d'usager.

Il consiste notamment à accompagner une *requête de localisation,* qui est émise d'un enregistreur d'accueil VLR à destination d'un enregistreur nominal HLR, pour un usager, par une demande de gel de l'envoi des données d'abonnement relatives à cet usager, si le mobile de cet usager est dans une zone prédéterminée.

Selon un mode de mise en oeuvre préférentiel, un enregistreur d'accueil VLR émet une *requête d'envoi de données d'abonnement d'usager*, à destination d'un enregistreur nominal HLR, pour un usager, lorsqu'il reçoit une demande d'établissement de communication relative au mobile utilisé par cet usager, si ce mobile s'est préalablement localisé auprès de cet enregistreur d'accueil VLR, et si cet enregistreur d'accueil VLR a déjà émis une requête de localisation, accompagnée d'une demande de gel d'envoi.

Selon un mode de mise en oeuvre préférentiel, un enregistreur d'accueil est programmé pour stocker des données d'abonnement d'usager lorsqu'il reçoit de telles données, qu'il ait émis ou non une demande de gel d'envoi pour ces données.

Un autre objet de l'invention est un enregistreur VLR d'accueil de terminaux mobiles d'usager, ou « mobiles », pour un réseau radiotéléphonique, d'un opérateur, qui est organisé par zones de localisation de mobiles, à constitution cellulaire, et plus particulièrement d'un réseau de type GSM où tout mobile, sous tension, se localise auprès du réseau, lorsqu'il se déplace d'une zone à une autre, et où cette localisation est prise en compte par une structure de localisation de mobiles composée d'enregistreurs d'accueil VLR supervisant chacun au moins une zone de localisation, et composée d'au moins un enregistreur nominal HLR supervisant l'ensemble des usagers du réseau de l'opérateur ;
chaque enregistreur d'accueil VLR comportant des moyens pour émettre une requête de localisation à destination d'un enregistreur nominal HLR, lorsque le mobile d'un usager se localise auprès de cet enregistreur d'accueil VLR, pour provoquer habituellement l'envoi de données d'abonnement relatives à cet usager, de cet enregistreur nominal HLR vers cet enregistreur d'accueil VLR ;
**caractérisé** en ce qu'il comporte en outre des moyens pour émettre une demande de gel de l'envoi des données d'abonnement relatives à un usager, lorsqu'il émet une requête de localisation à destination d'un enregistreur nominal HLR, pour un usager, si le mobile de cet usager est dans une zone prédéterminée.

Selon un mode de réalisation préférentiel, un enregistreur d'accueil VLR comporte des moyens pour émettre une requête d'envoi de données d'abonnement d'usager, à destination d'un enregistreur nominal HLR, pour un usager, lorsqu'il reçoit une demande d'établissement de communication relative au mobile utilisé par cet usager, si ce mobile s'est préalablement localisé auprès de cet enregistreur d'accueil VLR, et si cet enregistreur d'accueil VLR a déjà émis une requête de localisation, accompagnée d'une demande de gel d'envoi.

Selon un mode de réalisation préférentiel, un enregistreur d'accueil comporte des moyens pour stocker des données d'abonnement d'usager, lorsqu'il reçoit de telles données, qu'il ait émis ou non une demande de gel d'envoi pour ces données.

Un autre objet de l'invention est un enregistreur nominal HLR de terminaux mobiles d'usager, ou « mobiles », pour un réseau radiotéléphonique, d'un opérateur, qui est organisé par zones de localisation de mobiles, à constitution cellulaire, et plus particulièrement d'un réseau de type GSM où tout mobile, sous tension, se localise auprès du réseau, lorsqu'il se déplace d'une zone à une autre, et où cette localisation est prise en compte par une structure de localisation de mobiles composée d'enregistreurs d'accueil VLR supervisant chacun au moins une zone de localisation, et composée d'au moins un enregistreur nominal HLR supervisant l'ensemble des abonnés du réseau de l'opérateur ;
chaque enregistreur d'accueil VLR comportant des moyens pour émettre une requête de localisation à destination d'un enregistreur nominal HLR, lorsque le mobile d'un usager se localise auprès de cet enregistreur d'accueil VLR, pour provoquer habituellement l'envoi de données d'abonnement relatives à cet usager, de cet enregistreur nominal HLR vers cet enregistreur d'accueil VLR ;
**caractérisé** en ce qu'il comporte des moyens pour recevoir une demande de gel de l'envoi des données d'abonnement relatives à un usager, accompagnant une requête de localisation, et pour inhiber alors l'envoi des données d'abonnement relatives à cet usager.

L'invention, ses caractéristiques et ses avantages sont précisés dans la description qui suit en liaison avec la figure décrite ci-dessous.

Cette figure unique est un schéma rappelant l'architecture connue de la partie d'un réseau radiotéléphonique multicellulaire GSM concernée par les opérations de localisation des terminaux mobiles. Ce architecture de réseau radiotéléphonique est placé sous le contrôle d'un opérateur et organisé par zones de localisation de mobiles. Il comporte une structure de localisation des mobiles qui exploite : des enregistreurs d'accueil VLR, supervisant chacun au moins une des zones de localisation couvertes par le réseau ; et au moins un enregistreur nominal HLR de supervision des usagers de ce réseau. Comme il est connu, les localisations sont effectuées à l'initiative des mobiles SM et le réseau n'intervient dans la gestion de la localisation que sur requête individuelle des mobiles.

Une requête de localisation est émise par un mobile SM lorsqu'il reçoit, d'une station de base BTS, un numéro d'identification de zone de localisation différent de celui qu'il a en mémoire. Une telle requête de localisation est reçue par une station de base BTS située à portée radio de ce mobile. Elle est transmise, pour prise en compte, à un enregistreur d'accueil VLR supervisant la station de base. Cet enregistreur d'accueil VLR envoie à un enregistreur nominal HLR, une requête de localisation relative à ce mobile SM. Cette requête déclenche une procédure de mise à jour de localisation de mobile, dans l'enregistreur nominal HLR dont dépend l'usager de ce mobile. Cet enregistreur nominal HLR réalise en outre des traitements de contrôle de droits, et des traitements liés à des services exploitables par le mobile de l'usager à l'origine de la requête de localisation considérée.

Un enregistreur nominal HLR classique préparerait et enverrait à l'enregistreur d'accueil VLR, alors interrogateur, des messages contenant des données relatives à cet usager et notamment des informations relatives à son abonnement. Un enregistreur d'accueil VLR selon l'invention, qui émet une requête de localisation relative à un mobile SM, peut accompagner cette requête d'une demande de gel d'envoi, destinée à indiquer à cet enregistreur nominal HLR qu'il ne doit pas lui envoyer, immédiatement en retour, les données d'abonnement relatives à l'usager de ce terminal SM. L'enregistreur d'accueil VLR examine l'identité de la zone où est situé le mobile à l'origine de la requête de localisation considérée. Il distingue deux cas :
- soit la zone appartient à un ensemble de zones prédéterminées où chaque mobile ne reste généralement que peu de temps (par exemple un tronçon de voie rapide) ;
- soit la zone n'appartient pas à cet ensemble de zones prédéterminées.

Dans le second cas, cet enregistreur d'accueil VLR se comporte de manière classique : il n'émet pas de demande de gel de l'envoi des données.

Dans le premier cas, cet enregistreur d'accueil VLR émet une demande de gel de l'envoi des données, accompagnant la requête de localisation. En effet, cet enregistreur d'accueil VLR n'aura probablement pas à utiliser ces données, parce que probablement aucune communication ne sera à établir avec le mobile, pendant le laps de temps où ce mobile séjournera dans la zone considérée.

Un enregistreur nominal HLR selon l'invention, qui reçoit une requête de localisation, accompagnée d' une demande de gel d'envoi, ne prépare pas de messages contenant des données relatives à l'usager, et ne les envoie pas à l'enregistreur d'accueil VLR qui a émis la requête de localisation.

Le procédé selon l'invention est donc particulièrement intéressant pour les zones où un grand nombre de mobiles ne se localisent que très temporairement, et où seulement quelques-uns d'entre eux émettent ou reçoivent des appels pendant le temps où ils sont localisés dans cette zone. Une telle situation se présente par exemple en agglomération dense, ou dans une zone traversée par une voie de circulation empruntée par un grand nombre d'usagers équipés de mobiles.

Il est ainsi possible d'éviter aux enregistreurs nominaux HLR d'un opérateur, de préparer des messages d'insertion de données d'abonnement ISD et de les envoyer aux enregistreurs d'accueil VLR concernés, pour les usagers passant sans communiquer dans de telles zones. Ceci évite aussi aux enregistreurs nominaux HLR d'avoir à recevoir et traiter les acquittements que chaque enregistreur d'accueil VLR concerné aurait alors envoyé lors de la réception des données. De même, ceci soulage ces enregistreurs d'accueil VLR de la charge que constitue le traitement des messages d'insertion de données d'abonnement ISD et les opérations de stockage correspondantes, qui auraient faites inutilement.

Dans une forme préférée de mise en oeuvre du procédé, la demande de gel d'envoi est transmise sous la forme d'une extension du protocole normalisé MAP de dialogue entre équipements fixes d'un réseau GSM.

Par contre, les donnée d'abonnement d'un mobile utilisé par un usager présent dans une zone sont nécessaires à l'enregistreur d'accueil VLR supervisant cette zone si une communication concernant cet usager doit être établie. Dans ce cas, l'enregistreur d'accueil VLR envoie à l'enregistreur nominal HLR de l'usager une requête d'envoi de données d'abonnement d'usager, dans le cadre du protocole de dialogue MAP, pour se faire envoyer les données d'abonnement de cet usager, qu'il aurait stockées au moment de l'opération de localisation si le procédé habituel avait été utilisé.

Le procédé selon l'invention est mis en oeuvre par des moyens logiciels dans au moins un enregistreur d'accueil VLR, et dans au moins un enregistreur nominal HLR. Il est à noter qu'un enregistreur d'accueil VLR d'un réseau d'opérateur mettant en oeuvre le procédé de mise à jour selon l'invention, est programmé de manière à pouvoir accepter, traiter, et enregistrer des données d'abonnement qui lui sont transmises par des enregistreurs nominaux HLR, notamment des réseaux d'autres opérateurs, qui ne prennent pas en compte les demandes de gel d'envoi. En effet, un enregistreur nominal HLR classique va envoyer les données d'abonnement de la manière habituelle, même s'il reçoit une requête de localisation d'un usager accompagnée d'une demande de gel d'envoi.

## Revendications

1. Procédé de mise à jour des enregistreurs de localisation (VLR, HLR) des terminaux mobiles d'usager, ou « mobiles » (SM), dans un réseau radiotéléphonique, d'un opérateur, qui est organisé par zones de localisation de mobiles, à constitution cellulaire, et plus particulièrement d'un réseau de type GSM où tout mobile, sous tension, se localise auprès du réseau, lorsqu'il se déplace d'une zone à une autre, et où cette localisation est prise en compte par une structure de localisation de mobiles composée d'enregistreurs d'accueil (VLR) supervisant chacun au moins une zone de localisation, et composée d'au moins un enregistreur nominal (HLR) supervisant l'ensemble des usagers du réseau de l'opérateur ;
un enregistreur d'accueil (VLR) émettant une requête de localisation à destination d'un enregistreur nominal (HLR), lorsque le mobile d'un usager se localise auprès de cet enregistreur d'accueil (VLR), pour provoquer habituellement l'envoi de données d'abonnement relatives à cet usager, de cet enregistreur nominal (HLR) vers cet enregistreur d'accueil (VLR) ;
**caractérisé** en ce qu'il consiste à accompagner une requête de localisation qui est émise par un enregistreur d'accueil (VLR) à destination d'un enregistreur nominal (HLR), pour un usager, par une demande de gel de l'envoi des données d'abonnement relatives à cet usager, si le mobile de cet usager est dans une zone prédéterminée.

2. Procédé, selon la revendication 1, dans lequel un enregistreur d'accueil (VLR) émet une requête d'envoi de données d'abonnement d'usager, à destination de l'enregistreur nominal (HLR) pour un usager, lorsqu'il reçoit une demande d'établissement de communication relative au mobile utilisé par cet usager, si ce mobile s'est préalablement localisé auprès de cet enregistreur d'accueil (VLR), et si cet enregistreur d'accueil (VLR) a déjà émis une requête de localisation, accompagnée d'une demande de gel d'envoi.

3. Procédé selon l'une des revendications 1 ou 2, dans lequel un enregistreur d'accueil (VLR) stocke des données d'abonnement d'usager lorsqu'il reçoit de telles données, qu'il ait émis ou non une demande de gel d'envoi pour ces données.

4. Enregistreur d'accueil (VLR) de terminaux mobiles d'usager, ou « mobiles » (SM), pour un réseau radiotéléphonique, d'un opérateur, qui est organisé par zones de localisation de mobiles, à constitution cellulaire, et plus particulièrement d'un réseau de type GSM où tout mobile, sous tension, se localise auprès du réseau, lorsqu'il se déplace d'une zone à une autre, et où cette localisation est prise en compte par une structure de localisation de mobiles composée d'enregistreurs d'accueil (VLR) supervisant chacun au moins une zone de localisation, et composée d'au moins un enregistreur nominal (HLR) supervisant l'ensemble des usagers du réseau de l'opérateur ;
chaque enregistreur d'accueil (VLR) comportant des moyens pour émettre une requête de localisation à destination d'un enregistreur nominal (HLR), lorsque le mobile d'un usager se localise auprès de cet enregistreur d'accueil (VLR), pour provoquer habituellement l'envoi de données d'abonnement relatives à cet usager, de cet enregistreur nominal (HLR) vers cet enregistreur d'accueil (VLR) ;
**caractérisé** en ce qu'il comporte en outre des moyens pour émettre une demande de gel de l'envoi des données d'abonnement relatives à un usager, lorsqu'il émet une requête de localisation à destination d'un enregistreur nominal (HLR), pour un usager, si le mobile de cet usager est dans une zone prédéterminée.

5. Enregistreur d'accueil (VLR) selon la revendication 4, caractérisé en ce qu'il comporte en outre des moyens pour émettre une requête d'envoi de données d'abonnement d'usager, à destination de l'enregistreur nominal (HLR), pour un usager, lorsqu'il reçoit une demande d'établissement de communication relative au mobile utilisé par cet usager, si ce mobile s'est préalablement localisé auprès de cet enregistreur d'accueil (VLR), et si cet enregistreur d'accueil (VLR) a déjà émis une requête de localisation, accompagnée d'une demande de gel d'envoi.

6. Enregistreur d'accueil (VLR) selon l'une des revendications 4 ou 5, caractérisé en ce qu'il comporte des moyens pour stocker des données d'abonnement d'usager, lorsqu'il reçoit de telles données, qu'il ait émis ou non une demande de gel d'envoi pour ces données.

7. Enregistreur nominal (HLR) de terminaux mobiles d'usager, ou « mobiles » (SM), pour un réseau radiotéléphonique, d'un opérateur, qui est organisé par zones de localisation de mobiles, à constitution cellulaire, et plus particulièrement d'un réseau de type GSM où tout mobile, sous tension, se localise auprès du réseau, lorsqu'il se déplace d'une zone à une autre, et où cette localisation est prise en compte par une structure de localisation de mobiles composée d'enregistreurs d'accueil (VLR) supervisant chacun au moins une zone de localisation, et composée d'au moins un enregistreur nominal (HLR) supervisant l'ensemble des usagers du réseau de l'opérateur ;
chaque enregistreur d'accueil (VLR) comportant des moyens pour émettre une requête de localisation à destination d'un enregistreur nominal (HLR), lorsque le mobile d'un usager se localise auprès de cet enregistreur d'accueil (VLR), pour provoquer habituellement l'envoi de données d'abonnement relatives à cet usager, de cet enregistreur nominal (HLR) vers cet enregistreur d'accueil (VLR) ;
**caractérisé** en ce qu'il comporte des moyens pour recevoir une demande de gel de l'envoi des données d'abonnement relatives à un usager, accompagnant une requête de localisation, et pour inhiber alors l'envoi des données d'abonnement relatives à cet usager.
